# EUROPEAN PATENT APPLICATION

(11) **EP 4 345 062 A1**
(43) Date of publication of application: **03.04.2024**
(21) Application number: 22198380.2
(22) Date of filing: 28.09.2022
(51) Int. Cl.: C01B 32/174, H01M 4/92

(54) **CATALYTIC ELECTRODE FOR FUEL CELL OR ELECTROLYTIC CELL, AND PROCESS FOR MANUFACTURING SAID ELECTRODE**

(71) Applicant: Nawatechnologies, 13100 Aix-En-Provence (FR); L'AIR LIQUIDE, SOCIETE ANONYME POUR L'ETUDE ET L'EXPLOITATION DES PROCEDES GEORGES CLAUDE, 75007 Paris (FR)
(72) Inventor: ZIMMERMANN, Marc, 13530 Trets (FR); TEMPELAERE, Matthieu, 38330 Montbonnot Saint Martin (FR); BLASCO, Nicolas, 75007 Paris (FR); DEMARLY, Quentin, 75007 Paris (FR); TERAMOTO, Takashi, Yokosuka, 239-0847 (JP)
(74) Representative: Schmidt, Martin Peter

(57) **Abstract**

Method of preparing an array (13) of vertically aligned carbon nanotubes (14) for use in catalytic electrodes for fuel cell or electrolytic cell, comprising the steps of:
- providing an array (13) of vertically aligned carbon nanotubes (14) obtained by a gas phase growth process in which the precursor of a carbon nanotube growth catalyst is added continuously to the feed gas,
- depositing a plurality of platinum nanodots (15) onto the outer surface of said vertically aligned carbon nanotubes by using a gas phase deposition process such as ALD.

Said ALD process advantageously uses a platinum source gas which is Pt(PF₃)₄. Said nanodots can be protected by nanocaging.

## Description

### Technical field of the invention

The invention relates to the field of electrochemistry and more precisely to the sub-field of electrodes for electrochemical processes in aqueous systems. The invention pertains to novel catalytic electrodes containing platinum nanoparticles that can be used for fuel cells operating in aqueous system, and in particular for fuel cells using molecular oxygen and hydrogen. They can also be used for electrolytic cells operating with aqueous systems, and in particular for electrolytic cells splitting water into molecular oxygen and hydrogen. The invention also relates to a novel process for making such catalytic electrodes, using vertically aligned carbon nanotubes (VACNT) and a deposition process for forming platinum nanoparticles onto said VACNT. Said catalytic electrodes can be integrated into polymer membranes.

### State of the art

Catalytic electrodes for fuel cells combining gaseous oxygen and gaseous hydrogen to water are known for a long time, at least since the fifties of the last century when the early spacecraft programs required autonomous and reliable sources of electrical energy. Such electrodes for fuel cells comprising platinum nanoparticles dispersed over porous carbon materials were the subject-matter of a few early patents (see for instance US 3,231,428 disclosing Pt-Ir nanoparticles) and found their way into the seminal textbook *"*Modern Electrochemistry" by J. O'M Bockris & A.K.N. Reddy, published in 1973, (see vol. 2, p. 1382-1395). Nowadays, these electrodes work quite well, but are expensive as they contain much platinum: their electrochemical mass activity (expressed in Watts per gram of platinum) is rather low. In other words: only a small fraction of the platinum deposited onto the electrode is actually active. It would obviously be desirable to invest less platinum for obtaining the same catalytic effect.

Many different approaches have been taken to increase the efficiency of platinum utilization in catalytic electrodes. Vertically aligned carbon nanotubes (VACNT) are candidates for manufacturing membranes for proton exchange membrane fuel cells (PEMFC) since their specific structure enhances the gas diffusivity, water drainage and effective utilization of platinum. However, they are difficult to handle, as they cannot be used directly on their growth substrate. In arrays formed by vertically aligned carbon nanotubes (VACNT), most of the nanotubes are parallel, and more precisely, the main direction of the nanotubes (i.e. their long axis) is approximately vertical with respect to the substrate on which they are grown; a certain degree of deviation from verticality may occur and is be included in the terminology "vertically" aligned carbon nanotubes.

The paper *"*Vertically aligned carbon nanotube electrodes for high current density operating proton exchange membrane fuel cells", published in Journal of Power Sources 253 (2014), p. 104-113 by S. Murata et al. proposes a multi-step method for producing such catalytic membranes. In said method platinum particles are created on VACNT (grown on stainless steel substrates coated with iron catalyst and an inactive oxide), by infiltration with a platinum salt solution followed by reduction, and the VACNT are then transferred from the steel substrate to the membrane by hot pressing after having been fixed onto the membrane using an ionomer dipping process; the native steel substrate is then peeled off. This process allows coating of the VACNT with small platinum particles (about 2 nm to 2.5 nm in size) which are well distributed over the surface and which do not form agglomerates. However, it is a rather cumbersome and complex process. The Murata paper highlights that vertical aligning of the carbon nanotubes is important for manufacturing but irrelevant for the performance of the obtained platinum-loaded catalytic electrode, as the hot pressing step will damage the VACNT alignment.

Shen et al. ("Pt coated Vertically Aligned Carbon Nanotubes as Electrodes for Proton Exchange Membrane Fuel Cells", published in Procedia Engineering 93 (2014), p. 34-42) have reported a method in which a compact platinum film is deposited onto VACNT by sputtering. However, this film, the thickness of which may reach a few hundreds of nanometres, will block access to very small pores, resulting in a loss of specific surface. This technology does not seem to solve the problem of efficient utilization of platinum in a catalytic membrane.

WO 2022/047351 discloses a method for forming platinum nanodots on a substrate by using a sequential gas phase reaction process (referred to as Atomic Layer Deposition (ALD) or pulsed Chemical Vapor Deposition Process (pulsed-CVD)) using a specific platinum precursor molecule, Pt(PF₃)₄. Various carbon materials can be used as substrates. These nanodots allow a platinum utilization efficiency up to 75 %.

The present invention aims at providing catalytic electrodes for fuel cells with improved mass activity, and possibly improved efficiency, too, thereby bringing down the platinum load of the catalytic electrode and eventually decreasing its cost.

The present invention also aims at providing a simple method to obtain proton exchange membranes for fuel cells using VACNT as a porous material carrying finely distributed platinum particles, exhibiting improved mass activity and enhanced utilization of the catalyst and thereby decreasing the total catalyst load.

### Objects of the invention

The inventors have recognized that in prior art catalytic electrodes for fuel cells, a significant fraction of the platinum particles deposited onto the substrate are not catalytically active. According to the invention the problem is solved by a novel catalytic electrode comprising platinum dots deposited onto Vertically Aligned Carbon Nanotubes (VACNT).

VACNT arrays present a large external surface (typically more than 100 m²/g) which is readily accessible to chemical species in the gas phase (such as gaseous precursor for ALD or pulsed-CVD), while limiting their mobility between the nanotubes forming the VACNT array. The inventors have found surprisingly that certain structural properties of the VACNT array and the VACNT have a significant impact on the homogeneity of the platinum nanodots deposited by ALD or pulsed-CVD, and in particular of those nanodots which can be obtained by the abovementioned gas phase deposition process (ALD or pulsed-CVD) using Pt(PF₃)₄ in the presence of an oxidizing or a reducing agent.

According to one feature of the invention, the method according to the invention uses VACNT arrays that have been grown in a reaction chamber from a gas phase to which the carbon source gas and the catalyst precursor are admitted at the same time. This is a one-step growth process, in which a precursor of the growth catalyst (typically ferrocene droplets dissolved in toluene) is added continuously to the gas phase acting as the growth atmosphere (containing typically acetylene as the carbon source) of the carbon nanotube growth process.

This continuous addition of the growth catalyst to the feed gas can be achieved by periodic injection of an aerosol comprising said catalyst into the VACNT growth reactor, a process which is known as such from WO 2004/000727 (Commissariat a l'Énergie Atomique et aux Energies Alternatives). Such periodic injection is typically done by supplying pulses at very short time intervals using an injection pump similar to that used in Diesel engines; due to this pulsed injection it is also called "quasi-continuous" injection, as there is no measurable catalyst depletion between two subsequent pulses in the gas phase.

Compared to VACNT arrays obtained in a two-step process in which the catalyst is deposited onto the growth substrate and then the carbon nanotubes are grown from a gas phase, VACNT arrays obtained by the one-step process described above show at least two distinctive features, namely the presence of catalyst particles in the centre of the carbon nanotubes, and the presence of numerous defects on the outer surface of the carbon nanotubes which can promote anchoring and growth of platinum nanodots during a subsequent processing step.

The present inventors have found that the use of VACNT arrays obtained by this one-step process for the process of deposition of platinum nanodots leads to catalytic membranes with improved properties and higher electrochemical mass activity of platinum. On the other hand, a two-step VACNT process growth process in which, in a first step, the growth catalyst is deposited onto the substrate, followed by the carbon nanotube growth process itself, does not lead to VACNT arrays built up from carbon nanotubes having graphitic planes that are oriented perpendicularly with respect to the main direction of the nanotubes.

A first object of the present invention is therefore a method of preparing an array of vertically aligned carbon nanotubes for use in catalytic electrodes for fuel cell or electrolytic cell, comprising the steps of:
- providing an array of vertically aligned carbon nanotubes obtained by a gas phase growth process in which the precursor of a carbon nanotube growth catalyst is added continuously to the feed gas,
- depositing a plurality of platinum nanodots onto the outer surface of said VACNT by using a first gas phase deposition process.

In an advantageous embodiment, said platinum nanodots are deposited by a Chemical Vapor Deposition (CVD) technique, preferably by Atomic Layer Deposition (ALD) or pulsed-CVD, using preferably a specific gaseous precursor, namely Pt(PF₃)₄ in the presence of an oxidizing or a reducing agent. Said oxidizing agent can be oxygen radical or H₂O, O₂, O₃ and mixtures thereof. Said reducing agent can be molecular hydrogen.

ALD and pulsed-CVD terms will be used interchangeably in the invention, representing a two-step sequential gas phase deposition process where two independent precursors reactive species are introduced in each step and each step is separated by a gas purge.

According to yet another aspect of the invention the deposition process of platinum nanodots is carried out at a temperature of less than 300 °C, and preferably of less than 275 °C, more preferably comprised between 25 °C and 275 °C, and even more preferably between 50 °C and 250 °C. Heating the surface of the VACNT in the presence of platinum to a temperature that exceeds about 300 °C may lead to thermal degradation of the carbon nanotubes.

Said first gas phase deposition process advantageously comprises a sequence of alternate cycles each comprising an exposure time and a purge time, and wherein during said exposure time said array is exposed to Pt(PF₃)₄ gas and to a reactive gas, preferably selected from the group formed by : H₂, H₂O, O₂, O₃, NO₂, oxygen radicals and mixtures thereof, NH₃, SiH₄, Si₂H₆, Si₃H₈, SiH₂Me₂, SiH₂Et₂, N(SiH₃)₃, SiH₂(NEt₂)₂, other Si-H containing reactants, hydrogen radicals, hydrazine, methyl hydrazine, amines, NO, N₂O, boranes, B₂H₆, CH₄, C₂H₆, CH₃I, and mixtures thereof. The duration of said exposure time and/or of such purge time of each of said alternate cycles are advantageously comprised between 0.1 seconds and 60 minutes, preferentially between 1 second and 1000 seconds, and more preferably between 10 seconds and 100 seconds. The number of said sequences is advantageously comprised between 2 and 100, preferably between 5 and 35, more preferably between 8 and 30, and most preferably between 10 and 25.

According to an advantageous feature of the invention, said platinum nanodots have an average diameter comprised between 0.7 nm and 5 nm, preferably between 1 nm and 5 nm, and more preferably between 1 nm and 4 nm. As only the surface of platinum nanodots is catalytically active, smaller particles would allow a larger surface to volume ratio: the smaller the particle, the higher the specific activity (activity per gram of platinum). However, smaller particles are more prone to degradation over time, in particular due to Ostwald ripening. The effect is particularly visible below 2 nm. Above 5 nm the specific activity degrades significantly. Particles smaller than 2 nm can be used, but it is then preferable to protect them by nanocaging, as will be explained below.

In an advantageous embodiment of the invention, said first gas phase deposition process is carried out such that the total platinum load of said array of vertically aligned carbon nanotubes array is higher than 10 wt.-%, preferably higher than 20 wt.-%, more preferably higher than 30 wt.-%, and most preferably higher than 40 wt.-%.

According to another feature of the invention, the volumic mass of the VACNT array is higher than 0.15 g/cm³, preferably higher than 0.20 g/cm³, and still more preferably at least 0.25 g/cm³. It is preferred not to exceed a value of 0.70 g/cm³, and more preferably not to exceed 0.5 g/cm³. When the volumic mass of the VACNT array is too high, the nanotubes may form bundles with low accessibility to most of the surface of the tube; deposition of platinum nanodots will not be homogeneous. When the volumic mass is to low, the efficiency of use of precursors in the ALD or pulsed-CVD process seems to drop.

According to yet another aspect of the invention, the stability of platinum nanodots can be enhanced by encapsulating them in a nanocage made from an inorganic oxide deposited by an area-selective gas phase deposition process. According to this advantageous embodiment, the inventive process comprises further steps in which the VACNT array comprising platinum nanodots is first treated with an area-selective blocking agent, such as a surfactant, that is applied onto platinum nanodots but not on the nanotube surface and on the substrate of the VACNT, and in which then an inorganic porous oxide is deposited by using a second gas phase deposition process. Said gas phase deposition process is typically an ALD process in which said inorganic oxide is deposited by ALD onto the carbon nanotubes but not on said platinum nanodots.

Eventually, in a further step said blocking agent is removed. Said selective blocking agent is selected such that it able to stick selectively to the platinum dots, and is deposited only in the surface of said platinum nanodots; it is also selected such that it will not pollute the ALD reactor during deposition of the inorganic oxide. Surfactants can be used as blocking agents, such as amines, thiols or acids. In particular, said selective blocking agent is advantageously selected from an alkylamine, an allylamine such as oleylamine, an alkylthiol or a carboxylic acid such as oleic acid.

Said second gas phase deposition process is advantageously carried out such that said platinum nanodots have a mean diameter comprised between 0.7 nm and 5 nm, preferably between 1 nm and 4 nm, and more preferably between 1 nm and 3 nm.

Said second gas phase deposition process advantageously comprises a sequence of alternate cycles each comprising an exposure time and a purge time, and wherein during said exposure time said array is exposed to a organo-metallic precursor of a metallic element and to a reactive gas, to form an inorganic oxide of said metallic element, said metallic element being preferably selected from the group formed by : zirconium, niobium, tantalum, vanadium, tungsten, molybdenum, titanium, hafnium, cobalt, nickel, yttrium, cerium, lanthanum, other elements from the rare-earth or lanthanide series.

Another object of the present invention is an array of vertically aligned carbon nanotubes for use in catalytic electrodes for fuel cell or electrolytic cell, comprising a plurality of platinum nanodots on the outer surface of said nanotubes, characterized in that said carbon nanotubes have graphitic planes that are oriented perpendicularly with respect to the main direction of the nanotubes. The volumic mass of said array of vertically aligned carbon nanotubes array is advantageously comprised between 0.10 g/cm³ and 0.45 g/cm³, and preferably between 0.15 g/cm³ and 0.30 g/cm³, not taking into account the substrate onto which said VACNT array has been deposited. Said platinum nanodots preferably have a mean diameter comprised between 0.7 nm and 5 nm, preferably between 1 nm and 5 nm, more preferably between 1 nm and 4 nm, and most preferably between 1 nm and 3 nm. Said plurality of platinum nanodots advantageously comprises face-centered cubic platinum crystals.

Another object of the present invention is the use of an array according to the invention for making catalytic electrodes for fuel cell or electrolytic cells.

Yet another object of the present invention is a polymer membrane comprising an array of vertically aligned carbon nanotubes, comprising a plurality of platinum nanodots on the outer surface of said nanotubes, characterized in that said carbon nanotubes have graphitic planes that are oriented perpendicularly with respect to the main direction of the nanotubes.

### Brief description of the figures

Figure 1 shows schematically a cross section of a catalytic membrane according to prior art, with catalytic particles dispersed onto a granular porous carbon support.
Figure 2 shows schematically a cross section of a catalytic membrane according to the invention, with catalytic particles dispersed onto an array of vertically aligned carbon nanotubes. Figure 2a and 2b represent different embodiments of such a catalytic membrane.
Figure 3 shows electron microscopy images of carbon nanotubes grown in a one-step process, before (a) and after (b) deposition of platinum nanodots. The arrow identifies iron-rich phases which are the remains of catalyst particles trapped in the hollow carbon nanotube.
Figure 4 shows transmission electron microscopic images of carbon nanotubes grown in a process using ferrocene as a catalyst precursor and acetylene as the carbon source. Figure 4a represents the two-step growth process and shows perfect nanotubes with aligned graphite plans. Figure 4b represents the one-step growth process showing non-aligned graphite plans.
Figure 5 is a schematic sketch clarifying what can be seen on figure 4: a nanotube with aligned graphite walls (a) and a defective nanotube showing graphitic plans that are oriented almost perpendicularly with respect to the main axis of the nanotube.
Figure 6 shows the¹⁹F NMR spectrum of the Pt(PF₃)₄ used in the examples for the first gas phase deposition process.
Figure 7 refers to Example 1 and shows the platinum loading (a) and the utilisation efficiency of the Pt(PF₃)₄ precursor (b) on VACNT powder.
Figure 8 also refers to Example 1 and shows the utilisation efficiency of the Pt(PF₃)₄ precursor (a) and the platinum loading (b) on conventional porous carbon powder (reference KB).
Figure 9 also refers to Example 1 and shows a TGA analysis of 18 cycle Pt ALD samples (three replicates, curve (b)) compared to pristine VACNT (curve (a)). The full lines refer to residual mass (expressed in weight %), the dotted lines refer to DTA.
Figure 10 also relates to Example 1 and shows an XPS analysis of the Pt ALD sample at different numbers of cycles.
Figure 11 also relates to Example 1 and shows BF-TEM images and nanodot size distribution as a function of Pt(PF₃)₄/H₂ cycles during ALD deposition of platinum nanodots.
Figure 12 relates to Example 4 and to VACNT arrays grown in a one-step growth process. It shows transmission electron microscopy images with platinum nanodots that have been deposited using an ALD process as described in Example 2, after four ALD cycles, at two different magnifications (a) and (b). The size distribution of platinum nanodots is given in the histogram (c).
Figure 13 gives the same type of information as figure 12, after eighteen ALD cycles.
Figure 14 relates to Example 4 and to VACNT arrays grown in a two-step process. The same type of information as in figure 12 is displayed, after four ALD cycles.
Figure 15 gives the same type of information as figure 14, after eighteen ALD cycles.

### Detailed description

Unless otherwise specified, all percentage values refer to weight percent.

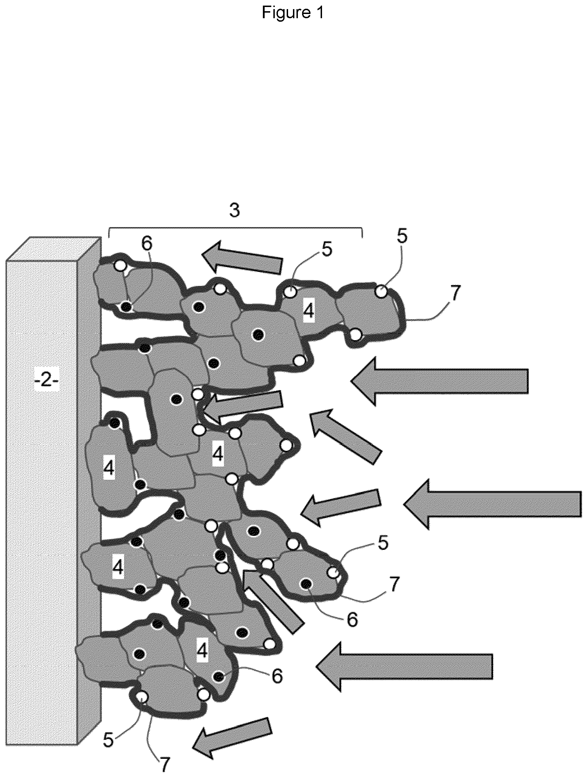

The present invention aims at providing improved catalytic VANCT arrays that can be used for making catalytic electrodes, in particular for use in fuel cells and electrolytic cells. Such electrodes typically comprise a polymer membrane comprising a layer of porous carbon material, onto which a catalyst is formed. Figure 1 schematically shows a catalytic membrane **1** according to prior art, comprising a layer of porous carbon **3** comprising porous carbon particles **4** which has been deposited onto a carbon substrate **2.** Platinum particles **5,6** are deposited on said layer of porous carbon as well as into the open porosity of said carbon layer **3,** and an appropriate polymer sheet **7** (which is typically an ionomer) is deposited onto said carbon layer. Platinum particles **6** which are buried inside the porous network of carbon particles may get inactivated easily, while platinum particles **5** on the surface of the porous carbon particles have no risk to get buried by reactions products or structural modification of the catalyst support.

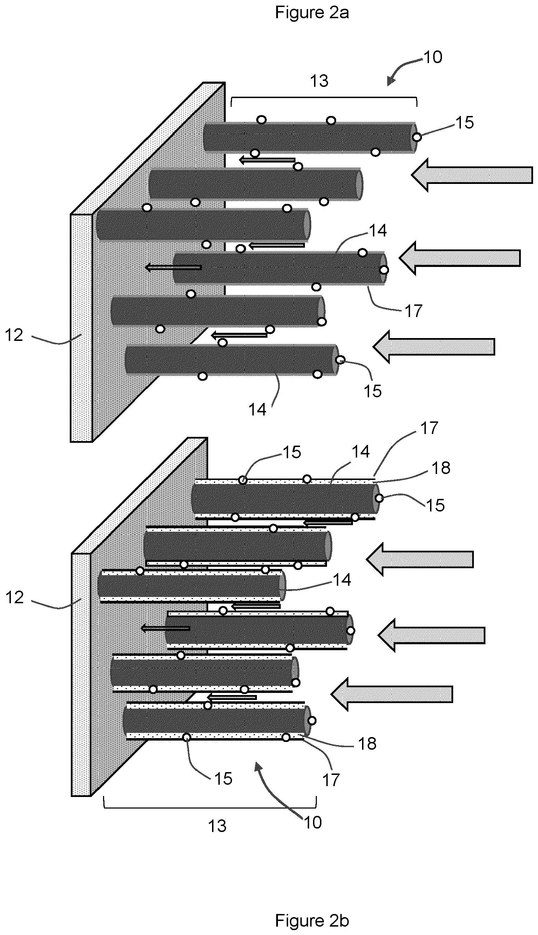

Figure 2 schematically shows two different embodiments of a catalytic membrane **10** using a VACNT array **13** as the porous carbon material. The VACNT array is deposited onto a carbon substrate **12,** and is formed by individual, parallel carbon nanotubes **14** having approximately the same length. As can be seen in comparison with figure 1, the access of gaseous molecules (represented on figures 1 and 2 by small arrows) to the ionomer membrane **2,12** is much easier with a VACNT array **13,** as their diffusion path forms a straight line, whereas the diffusion path across porous carbon particles **4** may be rather tortuous. In catalytic membranes for fuel cells, said gaseous molecules can be molecular hydrogen and oxygen which recombine to water. All platinum particles **6** form at the outside of the tubes, which have no pores other than the space inside the tube. The ionomer sheet **17** covers the platinum nanodots **15.** It should be noted that the difference between the embodiments represented on figure 2a and figure 2b is the presence of a protection layer **18** which protects the platinum articles against oxidation; this protection layer **18** may be formed of niobium oxide particles.

The present inventors have surprisingly found significant differences between catalytic electrodes based on VACNT arrays grown in a one-step process compared to VACNT arrays grown in a two-step process, when the same quantity of platinum is deposited using the same platinum deposition process according to the invention. In particular, the present inventors have found that VACNT arrays obtained in a two-step process in which, in a first step, the growth catalyst is deposited onto the substrate, followed by the VACNT growth process itself as the second step, do not allow to improve the efficiency of platinum in a catalytic membrane or catalytic electrode.

We will recall here briefly the principles of the one-step VACNT growth method for preparing carbon nanotubes as described initially in WO 2004/000727. This process proceeds by pyrolysis of a carbon source gas, namely acetylene, in the presence of a catalyst precursor, such as ferrocene, in a reaction chamber at elevated temperature. A liquid containing at least one liquid hydrocarbon precursor of carbon, and at least one metal compound precursor of a catalyst metal, is formed under pressure into finely divided liquid particles, such as droplets, by a periodic injection system, and the finely divided particles, such as droplets, formed in this way, are conveyed by a carrier gas stream comprising a gaseous carbon source; and introduced into the reaction chamber, where the deposition and growth of the carbon nanotubes take place. Ferrocene, toluene and acetylene can be used, respectively, as the catalyst precursor, the liquid hydrocarbon precursor and solvent of the catalyst precursor, and the gaseous carbon source. This process leads to an array of vertically aligned carbon nanotubes which are multiple-wall nanotubes.

The present inventors observe two differences between VACNT arrays grown in a one-step process compared to VACNT arrays grown in a two-step process: the presence or absence of catalyst particles within the carbon nanotubes, and the occurrence of defects on the surface of the carbon nanotubes. While catalyst particles are a relatively simple means to distinguish between the two classes of carbon nanotubes, their presence is not directly related to the differences that have been observed between the two classes of carbon nanotubes with respect to platinum nanodot deposition. On the other hand, the presence of defects on the surface of carbon nanotubes has been shown to be relevant for the deposition of TiO₂ nanoparticles through Atomic Layer Deposition (see L. Acauan et al., "Influence of Different Defects in Vertically Aligned Carbon Nanotubes on TiO2 Nanoparticle Formation trough Atomic Layer Deposition", ACS Applied Materials & Interfaces, vol. 8(25), p.16444-50; 2016). However, these surface defects are very difficult to detect and to identify.

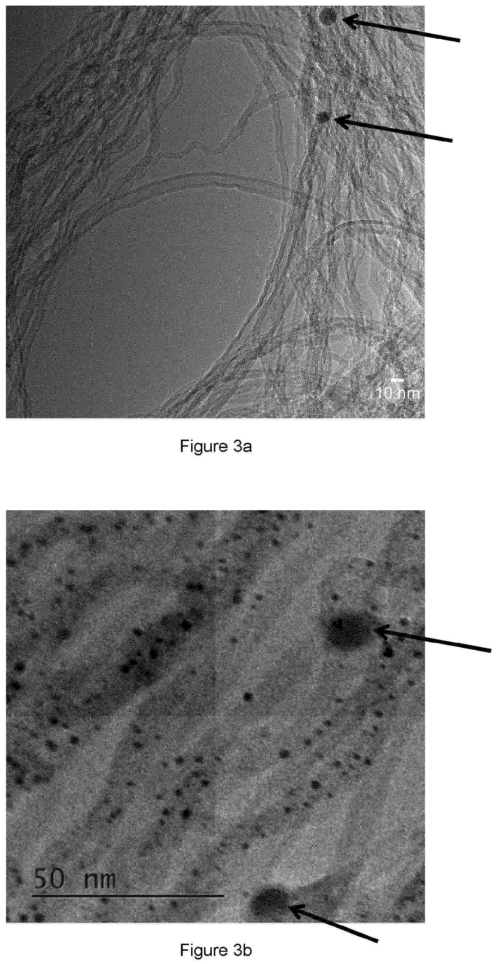

Figure 3 shows electron microscopic images of carbon nanotubes grown in a one-step process using ferrocene as a catalyst precursor and acetylene as the carbon source. Carbon-containing iron particles are found in the centre of carbon nanotubes; their chemical nature has been identified by energy dispersive spectroscopy carried out in the electron microscope. Such iron rich particles are virtually never found in carbon nanotubes grown in a two-step process. A likely scientific explanation for this is that in the two step process, in which the catalyst is deposited onto the growth substrate, *"the carbon source gas adheres to the surface of the catalyst and decomposes into carbon atoms, which are then dissolved and diffused into the catalyst. When carbon atoms reach supersaturation in the catalyst, they separate out from the top of the catalyst and form VACNTs at the top, while the catalyst particles are attached to the substrate"*; this is also called the "bottom growth pattern" (cited from page 1595, right column, of the publication *"*Recent progress in the synthesis and applications of vertically aligned carbon nanotube materials" by S. Huang et al., published in Nanotechnology Review 2021; 20:1592-1623. On the other hand, the one-step process, in which the iron catalyst is floating and has no interaction with the substrate, follows a so-called "top growth pattern" in which *"the carbon atoms are separated from the junction between the catalyst and the substrate to form the VACNTs structure. Namely, the catalyst particles are lifted up during the growth of VACNT and sealed by the catalyst particles. In general, VACNTs carry out the 'top growth pattern' when the catalyst has a weak interaction with the substrate".*

While figure 3a shows carbon nanotube grown in a one-step process before deposition of platinum particle, figure 3b shows similar carbon nanotubes grown in a one-step gas phase process after deposition of platinum particle using the inventive process. Said platinum particles are visible as small black dots, while two big black dots with a diameter of the order on ten nanometres represent the carbon-containing iron particles, i.e. the growth catalyst.

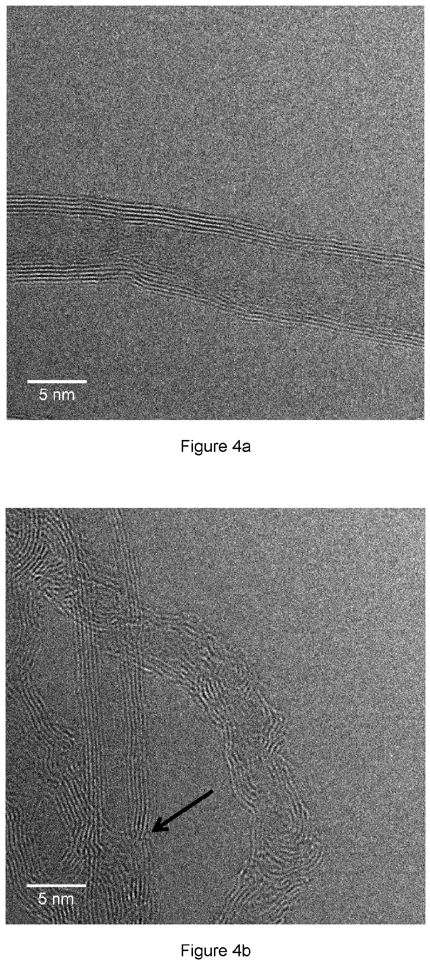

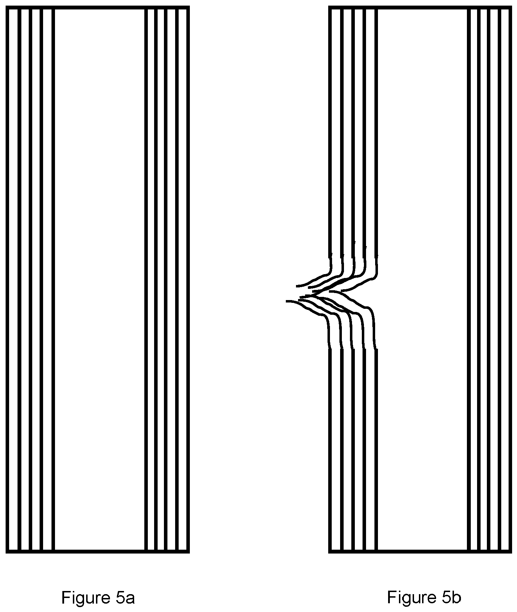

Figure 4 show transmission electron microscopic images of carbon nanotubes grown in a process using ferrocene as a catalyst precursor and acetylene as the carbon source. Figure 4a represents the two-step growth process and shows perfect nanotubes with aligned graphite plans. Figure 4b represents the one-step growth process showing non-aligned graphite plans: it can be seen that certain graphite plans are oriented perpendicularly with respect to the main direction of the nanotube. This crystallographic defect gives rise to specific surface defects. Figure 5 gives a schematic representation of these two structures: Figure 5a schematically represents the perfectly aligned graphite plan, while figure 5b schematically represents the defective carbon nanotubes, in which the crystallographic defect leads to a specific surface defect. The inventors believe (but do not wish to be bound by this theory) that the presence of graphitic planes that are oriented perpendicularly with respect to the main axis of the nanotubes is indicative of other, more subtle surface defects distributed all over the outer surface of the carbon nanotubes, which explains why platinum nanodots can be deposited much more homogeneously onto such a carbon nanotubes compared to defect-free nanotubes grown by the two-step process.

We will now describe the platinum nanodot deposition process and the differences between the results obtained after platinum nanodot deposition with VACNT arrays grown using a one-step growth process and those grown using a two-step process.

The inventive method comprises a step in which a plurality of platinum nanodots is deposited onto the outer surface of said VACNT by using a first gas phase deposition process. Said first gas phase process uses a specific gaseous platinum precursor which is preferably Pt(PF₃)₄. For VACNT arrays grown in a two-step process, this first gas phase deposition process leads to a platinum nanodot distribution (expressed by the coverage of the surface of the support) which shows poor homogeneity, and in particular many agglomerates as well as uncovered zones are found. Homogeneity of platinum nanodot distribution is good for VACNT arrays grown in a one-step process, no agglomerates and no large uncovered zones are found. When using Pt(PF₃)₄ said first gas phase deposition process, said plurality of platinum nanodots comprises face-centered cubic platinum crystals.

In this first gas phase deposition process, the efficiency of platinum use is comparable on VACNT arrays grown in a two-step process and on VACNT arrays grown in a one-step process: in a specific embodiment of the platinum deposition process according to the invention, about 18 deposition cycles are needed to achieve a load of 40 wt.-% of platinum.

However, the distribution of platinum nanodot diameters at high platinum load (40 wt.-% of platinum) using the inventive gas phase deposition process is found to be very inhomogeneous on VACNT arrays grown in a two-step process; in particular, many particles with a diameter above 10 nm are found, which is not desirable for the use of such VACNT arrays in catalytic electrodes. An average size of 3 nm with a narrow size distribution is found for platinum nanodots at the same platinum load of 40 wt.-% on VACNT arrays grown in a one step process. These results refer to a volumic mass of 0.08 g/cm³ for VACNT grown in a two-step process, and about 0.25 g/cm³ for VACNT grown in a one-step process; volumic mass values reported in the present specification refer to the mass of nanotubes only and do not include the growth substrate.

Concerning volumic mass, according to advantageous embodiment of the invention, the volumic mass of the VACNT array is higher than 0.15 g/cm³, preferably higher than 0.20 g/cm³, and still more preferably at least 0.25 g/cm³. It is preferred not to exceed a value of 0.70 g/cm³, and preferably not to exceed a value of 0.5 g/cm³; a value between 0.25 g/cm³ and 0.3 g/cm³ gave excellent results. In an advantageous embodiment, the volumic mass of VACNT is about 0.25 g/cm³ for VACNT grown in a one-step process.

The inventors have also found significant differences between catalytic electrodes using the platinum nanodot gas phase deposition process with Pt(PF₃)₄ according to the invention compared to the same platinum nanodot deposition process using different platinum precursors, even when the underlying VACNT arrays are the same, and in particular when the underlying VACNT arrays have been grown in a one step process. Furthermore, significant differences are identified when commercial carbon supports are used. These differences can be described in different ways.

Efficiency of platinum use in the first gas phase deposition process was found to be low on a commercial carbon support (reference Ketjen Black "KBEC300J") using the platinum nanodots gas-phase deposition process with Pt(PF₃)₄ according to the invention which is described below in more detail; with 8 deposition cycles, 13.2 wt.-% of Platinum was achieved on KBEC300J (0.35g), compared to 24.4 wt.-% achieved on said VACNT arrays grown in a one step process (0.35g), , showing a much lower nucleation and growth behaviour of Pt(PF₃)₄ onto KBEC300J. Similarly, on a yet different commercial carbon support reference ("Vulcan XC72", 1g), 48 cycles were necessary to achieve 31 wt.-% load, compared to 18 cycles to achieve 38 wt.-% load on said VACNT arrays grown in a one step process (0.35g). Coverage was inhomogeneous with many agglomerates and non-covered zones. Using a different precursor gas for platinum deposition, specifically Pt(MeCp)Me₃, did not allow to reach a platinum load of 40 wt.-% on VACNT arrays grown in a one-step process. Pt(MeCp)Me₃ required an O₂ based ALD process at high temperature - 250°C - which inducted thermal degradation of the VACNT during the Pt nanodots gas phase deposition process.

We will now describe in more detail the so-called first gas phase deposition process. In an advantageous embodiment of the process according to the invention, platinum nanodots are deposited on VACNT arrays by sequential injection of the Pt precursor and coreactant in a pulsed CVD process (also called ALD, Atomic Layer Deposition) in a reactor vessel provided with vacuum means and heating means. The VACNT arrays are first dried under a stream of inert gas (such as nitrogen), preferably at a temperature above 150 °C for a duration of at least 1 h. After drying, the Pt precursor and reactant, respectively Pt(PF₃)₄ and H₂ gas, are alternatively introduced into the vessel in sequences having a duration comprised between several tens of seconds and several hundreds of seconds, two subsequent sequences being separated by a purge using inert gas. These sequences can be repeated several times, typically several tens of times, until a desired platinum load is reached. The whole gas phase deposition process is carried out at a temperature of less than 300 °C, preferably comprised between 25 °C and 275 °C, and even more preferably between 50 °C and 250 °C.

In one advantageous embodiment, each Pt(PF₃)₄ pulse has a duration comprised between about 40 seconds and about 800 seconds, preferably between about 100 seconds and about 400 seconds; each H₂ pulse has a duration comprised between about 50 seconds and about 1000 seconds, preferably between about 100 seconds and about 750 seconds. They are separated by an inert gas purge of about 200 seconds to about 1000 seconds. As an example, each sequence consisted in about 150 sec to 250 sec Pt(PF₃)₄ pulse, a nitrogen purge of 500 seconds to 700 seconds, and a H₂ pulse of about 500 seconds to about 700 seconds. This sequence was typically repeated 10 to 15 times, until the desired platinum load is achieved.

In this first gas phase deposition process, which is an ALD process for platinum nanodot deposition, alternatively to H₂ gas, the following co-reactants can be used: H₂O, O₂, O₃, NO₂, oxygen radicals and mixtures thereof, NH₃, SiH₄, Si₂H₆, Si₃H₈, SiH₂Me₂, SiH₂Et₂, N(SiH₃)₃, SiH₂(NEt₂)₂, other Si-H containing reactants, hydrogen radicals, hydrazine, methyl hydrazine, boranes, amines, NO, N₂O, and mixtures thereof.

According to an essential feature of the invention, platinum nanodots are deposited by ALD using Pt(PF₃)₄ onto an array of VACNT grown in a one-step process using a floating catalyst generated from a precursor that is added to the carbon source gas continuously or quasi-continuously. The inventors believe (but do not wish to be bound by this theory) that Pt(PF₃)₄ can dissociate preferentially at local defects on the surface of a carbon nanotube, and that these defects are more frequent on VACNT arrays prepared by the one-step process than on those prepared by a two-step process. While these local defects have not been identified, this tentative explanation is plausible, when the following findings of the inventors are taken into account.

It is known that Pt(PF₃)₄ is a highly symmetrical molecule with a radius of gyration of about 3.04 Angstrom. The PF₃ entity is very stable compared to the Pt-P bond: in the Pt(PF₃)₄ molecule the P-F bond energy is 488 kJ/mol, whereas the Pt-P bond energy is 83 kJ/mol. In the Pt(PF₃)₃ molecule the corresponding bond energies are 483 KJ/mol and 95 kJ/mol. Calculations carried out by the inventors show that the adsorption of Pt(PF₃)₃ on graphene is more favourable than adsorption of Pt(PF₃)₄. While the full dissociation of PF₃ from Pt(PF₃)₄ is energetically unfavourable by 80.6 KJ/mol, the formation of a more stable intermediary with a Pt-P bond length of 3.56 Angstrom only needs an activation energy of 59.9 kJ/mol (which amounts to 24 kT at 298 K). As the adsorption of Pt(PF₃)₃ on a graphene surface is more favourable than the adsorption of Pt(PF₃)₄, this could shift the equilibrium towards dissociation of Pt(PF₃)₄.

This so-called "dissociative physisorption" mechanism can also be understood qualitatively by the geometrical rearrangement of the molecule when one PF₃ unit gets detached: In Pt(PF₃)₄ the coordination of Pt is tetrahedral while it is coplanar in Pt(PF₃)₃ which offers shorter C-Pt bond lengths.

As shown by calculations carried out by the inventors, the adsorption energy of Pt(PF₃)₃ on graphene is higher (72 kJ/mol) and the Pt-C bond length (3.46 Angstrom) is shorter than with Pt(PF₃)₄ (52 KJ/mol and 4.78 Angstrom, respectively). Furthermore, the difference in energy between a Pt(PF₃)₃ atop a carbon atom and a Pt(PF₃)₃ atop a ring centre is below the value of kT and should allow easy migration of the Pt(PF₃)₃ species over the surface. This could explain at least qualitatively that these Pt(PF₃)₃ species are capable of diffusion over the graphene surface until they find a local defect, where the energetics is most favourable for bonding and subsequent dissociation of the molecule to release atomic platinum. This theory is supported by the finding that for absorption of Pt(PF₃)₄ on a perfect graphene plane, the C-Pt bond length is 4.8 Angstrom, while it is 4.6 Angstrom on a ring defect of the 5-7 type, 4.1 Angstrom on a dangling CH₃ group, 3.9 Angstrom on a dangling CH₂ group, and 4.2 Angstrom on a vertical edge of a carbon nanotube. Therefore, Pt(PF₃)₄ adsorbs on the substrate as Pt(PF₃)₃ - C + PF₃(g). The Pt(PF₃)₃ is relatively mobile on the carbon surface and during the purge time of the pulsed-CVD or ALD sequence, the Pt(PF₃)₃ migrates to one of the hypothesized defects. The binding of Pt(PF₃)₃ at the defects is stronger so, once secured does not migrate and permits the nucleation of platinum nanodots.

It is known that in catalytic use, platinum nanodots tend to increase in size, thereby decreasing the useful lifetime of platinum nanodots in catalytic electrodes. This can be prevented by applying by a thin, porous protective inorganic coating to all the portions of the substrate between the platinum nanodots; this process known as "nano-caging" of platinum dots is known as such, as will be explained below. Such a thin, porous inorganic coating can be deposited by a gas phase deposition process such as ALD. This gas phase deposition process for making a porous inorganic coating is called here the "second" gas phase deposition process.

We will now describe in more detail the so-called second gas phase deposition process. Preferred porous inorganic coating used to form the metal oxide nano-caging are selected (not limited to) from the following list: niobium oxide, tantalum oxide, vanadium oxide, tungsten oxide, molybdenum oxide, titanium oxide, zirconium oxide, hafnium oxide, cobalt oxide, nickel oxide, yttrium oxide, cerium oxide, lanthanum oxide and other elements from the rare-earth/lanthanide series. Niobium(V) oxide is a particularly preferred oxide for the inorganic coating. Examples of metal oxide ALD precursors include, without limitation, Nb(=NtBu)(NEt₂)₃, Nb(=NtBu)(NMe₂)₃, Nb(=NtBu)Cp(NEt₂)₂, Nb(=NtBu)Cp(NMe₂)₂, Nb(=NbtBu)(MeCp)(NEt₂)₂, Nb(=NtBu)(MeCp)(NMe₂)₂, Nb(=NtBu)(OtBu)₂(NEt₂), Nb(=NtBu)(OtBu)₂(NEt₂), Ta(=NtBu)(NEt₂)₃, Ta(=NtBu)(NMe₂)₃, Ta(=NtBu)Cp(NEt₂)₂, Ta(=NtBu)Cp(NMe₂)₂, Ta(=NbtBu)(MeCp)(NEt₂)₂, Ta(=NtBu)(MeCp)(NMe₂)₂, Ta(=NtBu)(OtBu)₂(NEt₂), Ta(=NtBu)(OtBu)₂(NEt₂), Zr(NEt₂)₄, Zr(NMe₂)₄, Zr(NEtMe)4, ZrCp(NMe₂)₃, ZrMeCp(NMe₂)₃ Zr(EtCp)(NMe₂)₃, Zr(nPrCp)(NMe₂)₃, Zr(tBuCp)(NMe₂)₃, Zr(nBuCp)(NMe₂)₃, Zr(iBuCp)(NMe₂)₃, Hf(NMe₂)₄, Hf(NEtMe)4, HfCp(NMe₂)₃, HfMeCp(NMe₂)₃ Hf(EtCp)(NMe₂)₃, Hf(nPrCp)(NMe₂)₃, Hf(tBuCp)(NMe₂)₃, Hf(nBuCp)(NMe₂)₃, Hf(iBuCp)(NMe₂)₃, Ti(NMe₂)₄, Ti(NEt₂)4, TiCp(NMe₂)₃, Ti(Me₅Cp)(NMe₂)₃ Ti(Me₅Cp)(OMe)₃, Ti(Me₅Cp)(OiPr)₃, Ti(OiPr)₄, V(NMe₂)₄, V(NEtMe)4, W(CO)₆, W(MeCp)(CO)₃(NO), W(Me₃CHD)(CO)₃, W(=NtBu)₂(NMe₂)₂, W(=NtBu)₂(NHtBu)₂, W(=NtBu)₂(OtBu)₂, WH₂(iPrCp)₂, Mo(CO)₆, Mo(MeCp)(CO)₃(NO), Mo(Me₃CHD)(CO)₃, Mo(=NtBu)₂(NMe₂)₂, Mo(=NtBu)₂(NHtBu)₂, Mo(=NtBu)₂(OtBu)₂, MoH₂(iPrCp)₂, CoCp₂, Co(MeCp)₂, Co(EtCp)₂, CoCp(CO)₂, Co(iPr₂-amd)₂, Co(CO)₃(NO), CoCp(CO)₂, Co(iPr₂-amd)₂, Co(CO)₃(NO), NiCp2, Ni(MeCp)2, Ni(EtCp)2, Ni(iPr₂-amd)₂, Ni(tBu₂-amd)₂, Ni(allyl)(iPr2-amd), Ni(PF₃)₄, Y(MeCp)₃, Y(EtCp)₃, Y(iPrCp)₃, Y(nBuCp)₃, Y(EtCp)(iPr₂-amd)₂, Y(MeCp)(iPr₂-amd)₂, Ce(iPrCp)₃, Ce(nBuCp)₃, Ce(EtCp)(iPr₂-amd)₂, Ce(iPrCp)(iPr₂-amd)₂, La(iPrCp)₃, La(nBuCp)₃, La(MeCp)(iPr₂-amd)₂, La(EtCp)(iPr₂-amd)₂, La(iPrCp)(iPr₂-amd)₂ or mixtures thereof.

It is desirable not to coat the platinum nanodots themselves, as this may decrease their catalytic activity, but only the carbon nanotube substrate between neighbouring platinum nanodots. This can be achieved by protecting the platinum nanodots with a blocking agent prior to the deposition of the inorganic coating. The deposition of zirconium dioxide by ALD onto platinum nanodots protected by a blocking agent is known as such (so-called "nanocaging") from the publication *"*Extremely Stable Platinum Nanoparticles Encapsulated in a Zirconia Nanocage by Area-Selective Atomic Layer Deposition for the Oxygen Reduction Reaction"by N. Cheng et al., Advanced Materials, Volume 27, Issue 2, January 14, 2015, Pages 277-281).

Said blocking agent can be a surfactant, a thiol, an acid or an amine such as oleylamine ((9Z)octadec-9-en-1-amine, n° CAS: 112-90-3). A detailed description of nanodot caging by niobium oxide is given below in relation with Example 3; a process similar to this one can also be used for other oxides. Examples of blocking agents include, without limitation C₁-C₃₀ alkylamines such as oleylamine, dodecylamine, hexadecylamine, octadecylamine, C₁-C₃₀ allylamines, C₁-C₃₀ alkylthiols, such as 1-octanethiol, dodecanthiol, hexadecane thiol, octanethiol, octadecanethiol, and acids, such as linoleic acid, decanoic acid, lauric acid, oleic acid, stearic acid, tetradecylphosphonic acid and mixtures thereof.

The inventive process leads to a homogeneous distribution of platinum dots over the surfaces of the VACNT array; in particular the size distribution is narrow and homogeneous. The average size of said platinum nanodots is preferably comprised between 2 nm and 3 nm. The inventive process uses a platinum deposition process which avoids heating of the surface of the VACNT to a temperature that exceeds about 300 °C; a temperature above about 300 °C may degrade the nanotubes to an extent that is no longer acceptable. The inventive process allows manufacturing catalytic membranes in which the vertical alignment of the carbon nanotubes is conserved after having transferred the VACNT from the native metallic substrate to the membrane.

Said catalytic membranes comprise a polymeric layer deposited onto the fully prepared VACNT array, with platinum nanodots and possibly nanocaging. Said polymeric layer may be an ionomer layer such as Nafion.

### Examples

### Example 1: Platinum deposition on VACNT powder and carbon powder

Platinum nanodots were deposited on VACNT powder (supplied by NawaTechnologies) and KET Jenblack EC300J (KB, supplied by Lion Specialty Chemicals Co., Ltd.) by sequential injection of the Pt precursor and coreactant (pulsed CVD process), using a homemade fluidization reactor with vibration motors. The VACNT or the KB powder powder was filled into a glass tube reactor. The stainless steel filters were mounted on the bottom and top of the reactor. The reactor was vacuumed, and N₂ gas was flown from the bottom of the reactor to form a fluidization bed. In order to dry the powder before the deposition, the reactor was heated up to 200 °C for longer than 2 hours in N₂ stream. After the drying, the reactor was kept at 150 °C, while gas lines were held at 40 °C to prevent condensation of the precursor. The Pt precursor and reactant were Pt(PF₃)₄ and H₂ gas, respectively, and N₂ was used as carrier and purge gas. Pt(PF₃)₄, with 99% purity as demonstrated by ¹⁹F-NMR, was synthesized by Air Liquide. In the Pt deposition process by pulsed CVD, each sequence consisted in : 200 s of Pt(PF₃)₄ pulse, 600 s of N₂ purge, 500 s of H₂ pulse, and 600 s of N₂ purge; these sequences were repeated 2, 4, 8, or 18 times (18 times only for VACNT).

Thermogravimetric analysis was carried out on samples of powdered VACNT arrays according to the invention after a given number of ALD pulses, using a Mettler Toledo apparatus, as follows: a sample of about 5 mg of powder was placed in a ceramic crucible. A heat ramp with an increase of 10 degrees per minute was carried out starting from 25 °C up to 950°C, in a nitrogen - oxygene atmosphere (80%, 20%, respectively). This allowed determination of the mass loss, as carbon is burnt off, and eventually the residual platinum content of the powder. Results are given below.

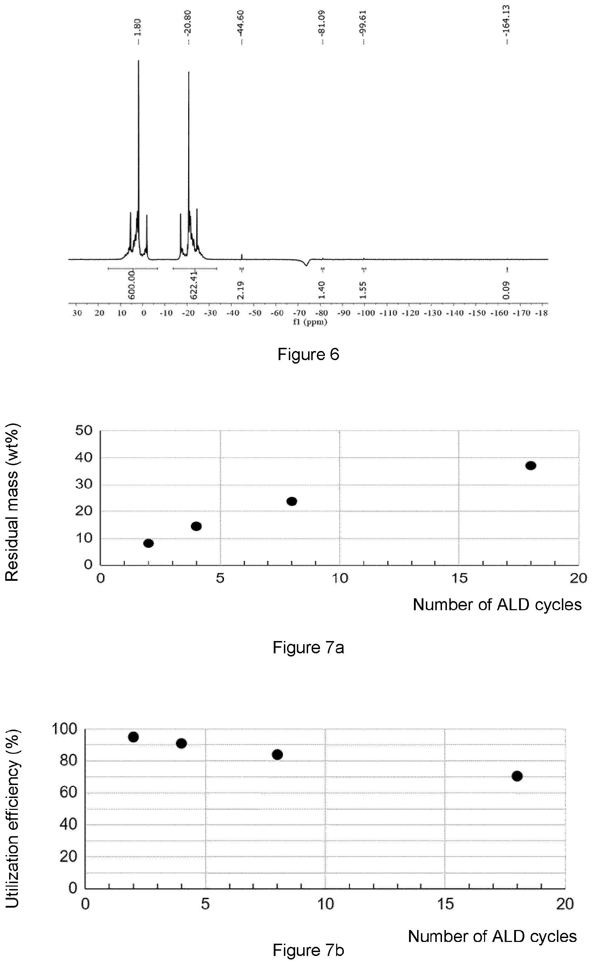

Figure 6 shows a ¹⁹F NMR spectrum of the Pt(PF₃)₄ used, measured on a Magritek Spinsolve 60 NMR spectrometer; neat liquid product was placed in a glass NMR tube.

Figure 7 shows the Pt loading (wt.-%) (Figure 7a) and the utilization efficiency of Pt(PF₃)₄ precursor (Figure 7b) on VACNT powder as a function of Pt(PF₃)₄/H₂ cycles. The Pt loading was measured using thermal gravimetric analysis (TGA). The loading amount was 8.1 wt.-% (weight percent), 14.5 wt.-%, 24.4 wt.-%, and 37.1 wt.-% by 2, 4, 8, and 18 cycles respectively. Utilization efficiency of the Pt(PF₃)₄ precursor was very high, especially the 2 and 4 cycles test. The efficiency was decreased by increasing the cycle numbers, in non-optimized conditions.

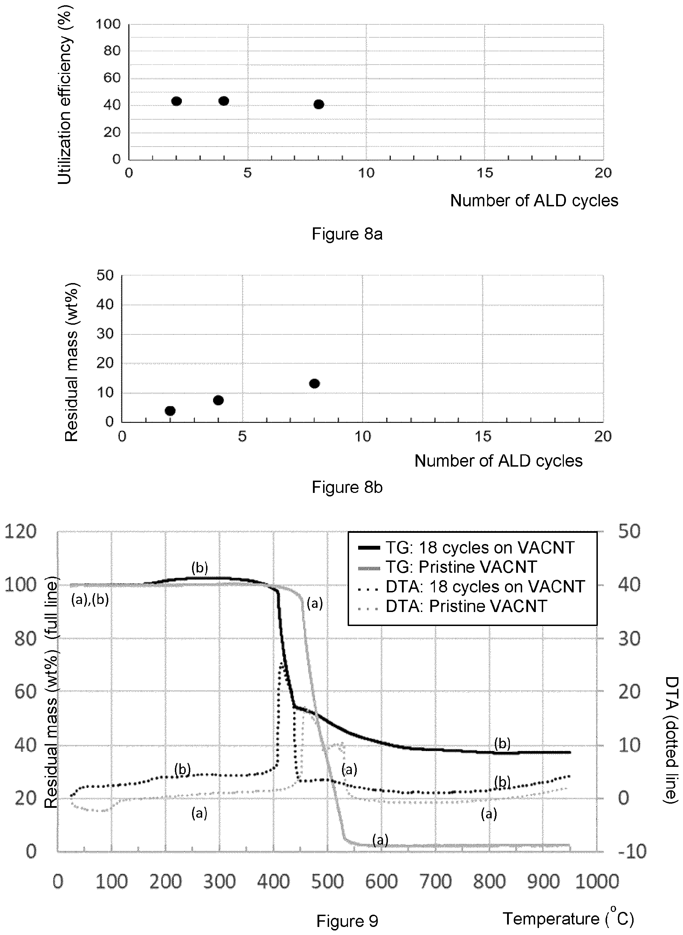

Figure 8 shows the corresponding curves for the abovementioned KB powder. The loading amount was 3.9 wt.-%, 7.5 wt.-%, and 13.2 wt.-% by 2, 4 and 8 cycles, respectively, which is significantly lower compared to the deposition on VACNT powder, although the deposition conditions were not changed. Utilisation efficiency of Pt(PF₃)₄ was significantly lower on KB powder compared to VACNT powder.

Figure 9 shows a TGA analysis of 18 cycle Pt ALD samples (three replicates, curve (b)) compared to pristine VACNT (curve (a)). The full lines refer to residual mass (expressed in weight %), the dotted lines refer to DTA.

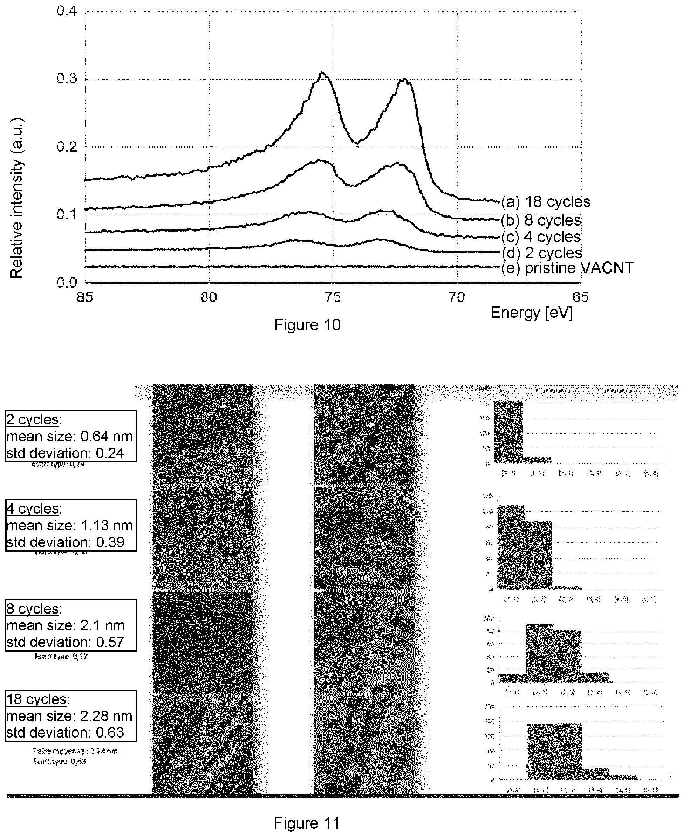

Figure 10 shows an X-Ray Spectroscopy (abridged as XPS) analysis of the Pt ALD sample at different numbers of cycles: (a) 18 cycles; (b) 8 cycles; (c ) 4 cycles; (d) 2 cycles; (e) pristine.

The distribution of the particle size of Pt nanodots was studied by Transmission Electron Microscopy (TEM). Figure 11 shows BF-TEM images and nanodot size distribution as a function of Pt(PF₃)₄/H₂ cycles. As the cycle number increased, particle size also increased, but the size can be mainly controlled from 1 nm to 3 nm even by the 18 cycles process. In addition, Pt nanodots are well distributed on VACNT, and heavy aggregation of Pt nanodots was not observed even by the increased cycle numbers.

### Example 2: Pt deposition on VACNT/Al sheet

Pt nanodots were deposited on VACNT/Al sheet (supplied by NawaTechnologies) by a pulsed CVD process, using a homemade reactor. The VACNT/Al sheet was loaded in the glass tube reactor. In order to dry the VACNT powder before the deposition, the reactor was heated up to 200 °C for longer than 2 hours. After the drying, the reactor was kept at 150 °C, while gas lines were held at 40 °C to prevent condensation of the precursor. The Pt precursor and reactant were Pt(PF₃)₄ and H₂ gas, respectively, and N₂ was used as carrier and purge gas. Pt(PF₃)₄ with 99% purity was synthesized by Air Liquide. In the Pt deposition process, a sequence consisting of 200 s of Pt(PF₃)₄ pulse, 600 s of N₂ purge, 500 s of H₂ pulse, and 600 s of N₂ purge was repeated 18 times.

In order to investigate if the Pt was distributed in the VACNT/Al sheet from the surface to Al substrate, the sample was cut and an exposed cross section image was obtained by SEM-EDS analysis (Hitachi SU9000). As-deposition and post-deposition annealed samples (5 % H₂ atmosphere) were analysed using EDS across the thickness of the cross section image; these line scans showed that Pt was well distributed from the surface of VACNT to the bottom, which suggests Pt(PF₃)₄ could be a good Pt precursor for a roll-to-roll process on VACNT/Al foil. Impurities like F are remaining on as-deposited sample, but the level of those impurities was decreased drastically by post deposition temperature or other chemical treatments.

### Example 3: Platinum nanodot caging

In a first sequence of steps (leading to sample S3-R210929-3-V50), platinum nanodot deposition was carried out by ALD on VACNT/Al sheet (supplied by NawaTechnologies) by sequential injection of Pt precursor and co-reactant (pulsed CVD process), using a homemade reactor. The VACNT/Al sheet was loaded in the glass tube reactor. In order to dry the VACNT/Al sample before the deposition, the reactor was heated up to 200 °C for longer than 2 hours. After the drying, the reactor was kept at 150 °C, while gas lines were held at 40 °C to prevent condensation of the precursor. The Pt precursor and reactant were Pt(PF₃)₄ and H₂ gas, respectively, and N₂ was used as carrier and purge gas. Pt(PF₃)₄ with 99% purity was synthesized by Air Liquide. In the Pt deposition process, a sequence consisting of 200 s of Pt(PF₃)₄ pulse, 600 s of N₂ purge, 500 s of H₂ pulse, and 600 s of N₂ purge sequences was repeated 4 times.

In a second sequence of steps, area-selective deposition of Nb₂O₅ by ALD was carried out on the product obtained in the first sequence of steps, as follows: After Pt deposition on VACNT/Al sheet using Pt(PF₃)₄ and H₂, the sample was dipped in 5mM oleylamine in ethanol for 5 hours. After the oleylamine treatment, the sample was rinsed 3 times by ethanol, and then dried using a vacuum desiccator. The Nb₂O₅ was deposited by ALD in a homemade ALD reactor at 250 °C using a Niobium amido imido metal-organic precursor (Air Liquide) and water as Nb source and co-reactant respectively (called below "Nb-precursor"). In the deposition process, a sequence consisting of 30 s of said Nb-precursor pulse, 300 s of N₂ purge, 30 s of water pulse, and 300 s of N₂ purge was repeated 3 times. After the deposition, oleylamine was removed by heating at 200 °C in air.

The localization of Pt particles on carbon support and distribution of Nb₂O₅ was characterized using scanning transmission electron microscopy with energy dispersive X-ray spectroscopy under environmental conditions. It was observed that the Nb₂O₅ deposition occurred mainly on carbon support, and most of the Pt nanodots were exposed even after the 3 cycles Nb₂O₅ ALD.

In-situ environmental TEM was used in order to check the stability of the 3 cycles Nb₂O₅ ALD samples on Pt/C catalyst. In order to monitor the morphology change of the samples, the ALD sample and pristine Pt/C catalyst were heated at 200 °C in vacuum first, and then heated at 350 °C with air injection. Pressure of the sample holder was kept at 4 Pa. For the 3 cycles ALD sample, STEM images showed less morphological change of Pt nanodots. However, the image of the pristine sample showed that the Pt nanodots are aggregated heavily, and the size of Pt nanodots became larger after the in-situ environmental TEM test. Also, SEM images revealed that the carbon surface was damaged very much and holes are generated on the surface of carbon, which suggests the catalytic reaction between carbon and oxygen occurred on pristine Pt/C catalyst.

### Example 4: Comparison between VACNT arrays obtained by a one-step process and by a two-step process

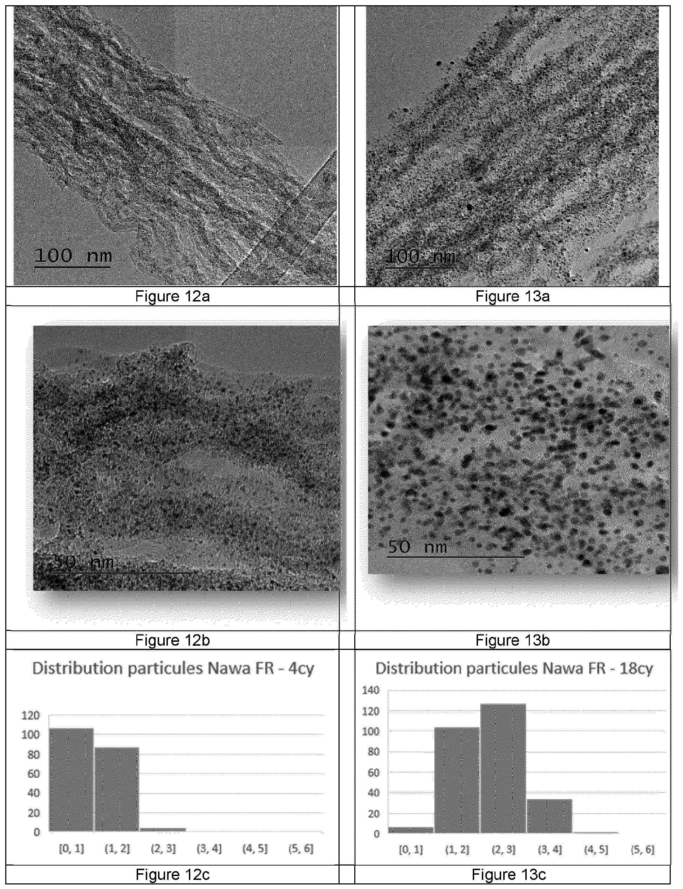

Figures 12 and 13 display transmission electron microscopy images showing platinum nanodots that have been deposited using an ALD process as described in Example 2, onto VANCT arrays obtained by a one-step pyrolysis with periodic injection of catalyst precursor (ferrocene dissolved in toluene) into VACNT growth reactor; the VACNT growth was based on the use of acetylene as a carbon source. The corresponding histograms of the platinum particle size distribution are shown, too; the horizontal axis is scaled in nanometres. Figures 12a, 12b and 12c refer to four ALD cycles, as described in Example 2, whereas Figures 13a, 13b and 13c refer to 18 of such ALD cycles.

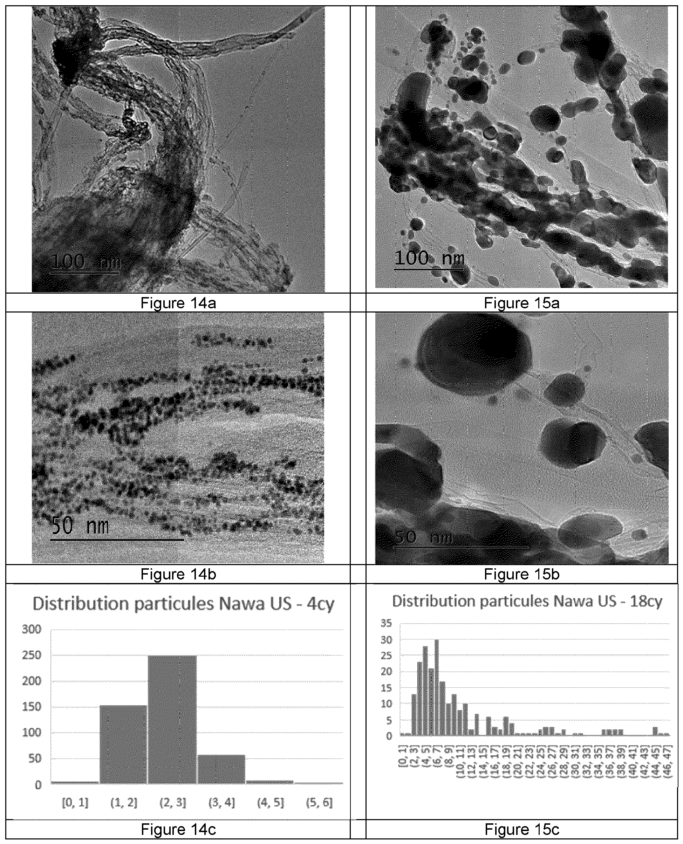

Figures 14 and 15 display transmission electron microscopy mages showing platinum nanodots that have been deposited using an ALD process as described in Example 2, onto VACNT arrays obtained by a two-step process, in which, in a first step, the VACNT growth catalyst has been deposited onto the VACNT growth substrate, and, in a second step, the VACNT array has been grown using acetylene as a carbon source. The corresponding histograms of the platinum particle size distribution are shown, too; the horizontal axis is scaled in nanometres. Figures 14a, 14b and 14c refer to four ALD cycles, as described in Example 2, whereas Figures 15a, 15b and 15c refer to 18 of such ALD cycles.

The comparison between figures 12 and 13 on the one hand, and of figures 14 and 15 on the other hand, is striking, as they are based on the same ALD process for the deposition of platinum nanodots, the only difference being the preparation process for making the VACNT array. It can be seen immediately that platinum ALD process leads to much coarser platinum particles on VACNT arrays obtained in a two-step growth process than in a one-step growth process.

### Example 5: Comparison of mass activity and surface activity of platinum nanodot catalysts deposited on VACNT arrays obtained by a one-step process, according to the invention, and of platinum nanodot catalysts on carbon powder according to prior art

This electrochemical test was carried out on seven samples, namely three samples according to the invention with four, eight and eighteen platinum ALD cycles, two commercial platinum catalysts on carbon powder (references Pt_C Vulcan 29% and Pt_C_Vulcan 47.2%, said percentage values referring to the platinum load) and two platinum nanodot catalyst prepared by ALD with the Pt(PF₃)₄ precursor on commercial carbon powder (Pt_XC72_ALD 150C and Pt_XC72_ALD 300C, wherein XC72 is the reference of the powder and four commercial catalyst samples and 150C and 300C, respectively, is the temperature of ALD deposition).

Electrochemical testing was carried out in a conventional rotationnary disc electrode configuration. An ink was prepared using powder of the catalyst (for this, VACNT arrays were reduced to powder); said ink was coated onto the tip of a rotating electrode in an electrochemical cell, using an electrolyte of 0.1 M perchloric acid (HClO₄). A potentiostat (Biologic VPM3) was used.

Results are summarized on figure 16 for two different potentials, namely 0.90 V and 0.95 V, knowing that 0.90 V is very close to the electrochemical conditions experienced by the catalyst in an oxygen-hydrogen fuel cell. Figure 16a shows the surface activity (abridged SA), expressed in [µA/cm²] as a current measured at a certain potential, divided by the active surface of platinum nanodots. Figure 16b shows the mass activity (abridged MA), expressed in [A/mg] as a current measured at a certain potential divided by the platinum mass. It can be seen that at a potential of 0.90 V, the activity of the catalyst according to the invention (with 18 cycles of platinum deposition by ALD) is close to that of the catalyst according to prior art.

### Example 6: Comparison of mass activity of platinum nanodot catalysts deposited on VACNT arrays obtained by a one-step process, according to the invention, and of platinum nanodot catalysts on carbon powder according to prior art, used as a gas diffusion electrode

A commercial gas diffusion electrode H23C8 was cut to the proper size and VACNT according to invention have been transferred to the gas diffusion electrode by using a laboratory calendering machine (TOB JS-300) with a maximum pressure of 500 N/m. Reference samples have been realized by coating the gas diffusion electrode with an ink prepared using powder of the catalyst. Said ink was then dried for five minutes at 70 °C. The electrode was then mounted into the electrolytic cell and an electrolyte with 1 M perchloric acid (HClO₄) was added. The mass activity as determined at different potentials, using different catalysts. The result is sown on figure 17 for different catalysts, namely two catalysts according to the invention (references Pt_VACNT_150C-Nafion and Pt_VACNT_150C-ss Nafion) and three prior art catalysts (references Pt-20%_XC72, Pt-30%_XC72, and Pt-47%_TEC).

Pt_VACNT_150C-ss Nafion corresponds to the as-prepared VACNT electrode. Activity seems lower than references catalysts. This is to be expected, since VACNT are highly hydrophobic and oxygen reduction reaction can thus only occur at the gas-liquid interface, namely at the top of the VACNT carpet. Small quantities of Nafion have been added to the VACNT electrode (Pt_VACNT_150C-Nafion) by impregnation with droplets of a Nafion solution and subsequent dyring. This allows a better use of the electrode's volume, by expanding the gas-liquid interface within the VACNT carpet. The activity of the catalyst rises significantly as expected.

## Claims

1. Method of preparing an array of vertically aligned carbon nanotubes for use in catalytic electrodes for fuel cell or electrolytic cell, comprising the steps of:
- providing an array of vertically aligned carbon nanotubes obtained by a gas phase growth process in which the precursor of a carbon nanotube growth catalyst is added continuously to the feed gas,
- depositing a plurality of platinum nanodots onto the outer surface of said vertically aligned carbon nanotubes by using a first gas phase deposition process.

2. Method according to claim 1, wherein said first gas phase deposition process is atomic layer deposition, chemical vapour deposition, or pulsed chemical vapour deposition.

3. Method according to claim 1 or two, wherein said first gas phase deposition process is carried out at a temperature of less than 300 °C, preferably comprised between 25 °C and 275 °C, and even more preferably between 50 °C and 250 °C.

4. Method according to claims 2 or 3, wherein said first gas phase deposition process comprises a sequence of alternate cycles each comprising an exposure time and a purge time, and wherein during said exposure time said array is exposed to Pt(PF₃)₄ gas and to a reactive gas, preferably selected from the group formed by : H₂, H₂O, O₂, O₃, NO₂, oxygen radicals and mixtures thereof, NH₃, SiH₄, Si₂H₆, Si₃H₈, SiH₂Me₂, SiH₂Et₂, N(SiH₃)₃, SiH₂(NEt₂)₂, other Si-H containing reactants, hydrogen radicals, hydrazine, methyl hydrazine, amines, NO, N₂O, boranes, B₂H₆, CH₄, C₂H₆, CH₃I, and mixtures thereof.

5. Method according to claim 4, wherein the duration of said exposure time and/or of such purge time of each of said alternate cycles are comprised between 0.1seconds and 60 minutes, preferentially between 1 second and 1000 second, and more preferably between 10 seconds and 100 seconds.

6. Method according to claim 4 or 5, wherein the number of said sequences is comprised between 2 and 100, preferably between 5 and 35, more preferably between 8 and 30, and most preferably between 10 and 25.

7. Method according to any of claims 1 to 6, wherein the volumic mass of said array of vertically aligned carbon nanotubes array is comprised between 0.10 g/cm³ and 0.45 g/cm³, et preferably 0.15 g/cm³ and 0.30 g/cm³, not taking into account the substrate onto which said VACNT array has been deposited.

8. Method according to any of claims 1 to 7, wherein the total platinum load of said array of vertically aligned carbon nanotubes array is higher than 10 wt.-%, preferably higher than 20 wt.-%, more preferably higher than 30 wt.-%, and most preferably higher than 40 wt.-%.

9. Method according to any of claims 1 to 8, comprising further steps in which said array is first treated with a surfactant able to stick selectively to the platinum dots, and in which then an inorganic oxide is deposited by using a second gas phase deposition process.

10. Method according to claim 9, wherein said surfactant is an alkylamine, an allylamine such as oleylamine, an alkylthiol or a carboxylic acid such as oleic acid.

11. Method according to claim 9 or 10, in which said second gas phase deposition process comprises a sequence of alternate cycles each comprising an exposure time and a purge time, and wherein during said exposure time said array is exposed to a organo-metallic precursor of a metallic element and to a reactive gas, to form an inorganic oxide of said metallic element, said metallic element being preferably selected from the group formed by : zirconium, niobium, tantalum, vanadium, tungsten, molybdenum, titanium, hafnium, cobalt, nickel, yttrium, cerium, lanthanum, other elements from the rare-earth or lanthanide series.

12. Array of vertically aligned carbon nanotubes for use in catalytic electrodes for fuel cell or electrolytic cell, comprising a plurality of platinum nanodots on the outer surface of said nanotubes, **characterized in that** said carbon nanotubes have graphitic planes that are oriented perpendicularly with respect to the main direction of the nanotubes.

13. Array according to claim 12, wherein said platinum nanodots have a mean diameter comprised between 0.7 nm and 5 nm, preferably between 1 nm and 5 nm, more preferably between 1 nm and 4 nm, and most preferably between 1 nm and 3 nm.

14. Array according to claim 12 or 13, **characterized in that** said plurality of platinum nanodots comprises face-centered cubic platinum crystals.

15. Use of an array according to any of claims 12 to 14 for making catalytic electrodes for fuel cell or electrolytic cells.
